# EUROPEAN PATENT APPLICATION

(11) **EP 3 617 088 A1**
(43) Date of publication of application: **04.03.2020**
(21) Application number: 18791140.9
(22) Date of filing: 17.04.2018
(51) Int. Cl.: B65D 75/62, A23L 21/10, B65D 85/72

(54) **CONTENT-FILLED PILLOW PACKAGING BAG**

(30) Priority: 28.04.2017 JP 2017089132
(71) Applicant: Orihiro Plantdew Co., Ltd., Takasaki-shi, Gunma 370-0886 (JP)
(72) Inventor: TSURUTA Orihiro, Takasaki-shi Gunma 370-0886 (JP)
(74) Representative: Grünecker Patent- und Rechtsanwälte PartG mbB
(86) International application number: PCT/JP2018/015807
(87) International publication number: WO 2018/198875

(57) **Abstract**

A packaging bag with contents (1), the packaging bag with contents (1) being formed by filling a pillow packaging bag (10) with a fluid material (5) and sealing the pillow packaging bag (10), wherein: a lateral seal (22) disposed on an upper end of the pillow packaging bag (10) has a projecting portion (23) and a retreated portion (24) formed in a stepped state; a back seal (21) disposed on a rear surface of the pillow packaging bag (10) is coupled only to the retreated portion (24); and the projecting portion (23) is cut off in the lateral direction so that the fluid material (5) is pushed out. The back seal (21) is folded onto the retreated portion (24). A cutting-off notch (26) is provided on an inner edge portion (25) connecting the projecting portion (23) and the retreated portion (24).

## Description

### Technical Field

The present invention relates to a pillow packaging bag with contents in which a liquid or a fluid is filled.

### Background Art

The pillow packaging bag is a pillow-shaped bag obtained by heat-fusing (back seal) one sheet of film back to back so as to make a tube, and then, by heat-fusing (lateral seal) it in a lateral direction at a constant interval and by cutting it. The pillow packaging bag is also called a butt-seamed bag or a back-sealed bag and is often used for automatic packaging for foods.

A bite-size Konjac-containing jelly sealed in a bag not in a cup is known. Such bagged jelly foods are easy to hold, and the jelly can be easily pushed out of the opened bag.

### Prior Art Documents

### Patent Literature

Patent Literature 1: Japanese Patent Laid-Open No. 2015-223166
Patent Literature 2: Japanese Patent Laid-Open No. 2010-213690
Patent Literature 3: Japanese Patent No. 5376463

### Summary of Invention

### Technical Problem

In the case of a bagged jelly food, the jelly is easily pushed out of the bag. Thus, a consumer often holds an opening formed by cutting off a part of a lateral seal in the mouth and directly puts the jelly into the mouth.

However, if the opening is not cut cleanly, when the opening touches the lip, it gives an unpleasant feeling. Particularly in the case of the jelly food using the pillow packaging bag, since the back seal is disposed close to the opening, the back seal sticks the lip, which gives the unpleasant feeling.

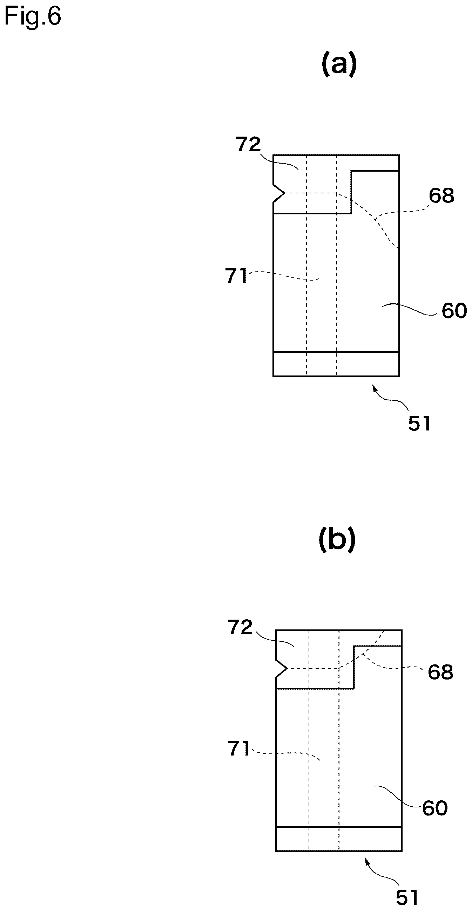

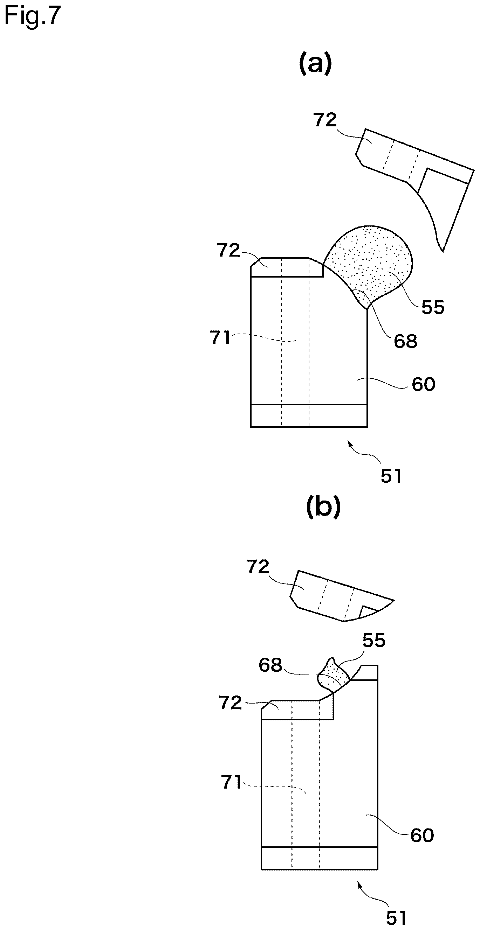

Figs. 6 are views illustrating a conventional jelly food 51. Fig. 7 is a view illustrating a state where a Konjac-containing jelly 55 is pushed out in the conventional jelly food 51.

In the case of the conventional bagged jelly food 51, when a lateral seal 72 is cut off so as to form an opening 68, the opening 68 is caught by a back seal 71. When the opening 68 is caught by the back seal 71, such problems frequently occur that the opening 68 becomes larger than necessary or to the contrary, the opening 68 is not opened sufficiently.

Since the back seal 71 cannot be torn easily in the lateral direction, the consumer applies a strong force when the opening 68 is to be formed. Thus, as soon as the back seal 71 is cut off, the opening 68 does not advance along the lateral direction in many cases as illustrated in Figs. 6.

When the opening 68 advances toward a center side as in Fig. 6(a), a packaging bag 60 is cut out largely, and the opening 68 becomes larger than necessary. Thus, the Konjac-containing jelly 55 overflows or pops out as in Fig. 7(a).

On the other hand, if the opening 68 advances toward an upper end as in Fig. 6(b), the packaging bag 60 is torn into a small piece, and the opening 68 becomes small and is not sufficiently opened. Thus, even if the packaging bag 60 is pressed, the Konjac-containing jelly 55 is not pushed out favorably as in Fig. 7(b).

Moreover, even if the opening 68 can be formed linearly along the lateral direction, such a problem also frequently occurs that, as soon as the back seal 71 is torn off in the lateral direction, the Konjac-containing jelly 55 pops out.

That is because the consumer applies a strong force so as to tear the back seal 71 and to tear off the packaging bag 60 with an excessive force. Thus, the Konjac-containing jelly 55 pops out of the opening 68 with force.

Also, in the case where an opening notch is disposed in the back seal as in a packaging product described in Patent Literature 3, the consumer applies a strong force when opening it. Thus, the opening is not formed appropriately, and such a problem occurs that the contents overflow or the contents are not pushed out favorably even if the packaging bag is pressed.

However, in the case of the jelly food using the pillow packaging bag, those with which the consumer does not feel uncomfortable when holding the opening in the mouth or those in which the opening can be formed appropriately have not been proposed.

The present invention was made in view of the problems described above and has an object to propose a pillow packaging bag with contents which hardly gives an unpleasant feeling to a consumer when it is held in the mouth.

The present invention has an object to propose a pillow packaging bag with contents formed appropriately without catching of the opening by the back seal when the lateral seal is cut off so as to form the opening.

### Solution to Problem

A pillow packaging bag with contents according to a first embodiment of the present invention is a packaging bag with contents, the packaging bag with contents being formed by filling a pillow packaging bag with a fluid material and sealing it, characterized in that: a lateral seal disposed on an upper end of the pillow packaging bag has a projecting portion and a retreated portion formed in a stepped state; a back seal disposed on a rear surface of the pillow packaging bag is coupled only to the retreated portion; and the projecting portion is cut off in the lateral direction so that the fluid material is pushed out.

The pillow packaging bag with contents according to a second embodiment of the present invention is characterized in that, in the first embodiment, the back seal is folded onto the retreated portion.

The pillow packaging bag with contents according to a third embodiment of the present invention is characterized in that, in the first or second embodiment, a cutting-off notch is provided on an inner edge portion connecting the projecting portion and the retreated portion.

The pillow packaging bag with contents according to a fourth embodiment of the present invention is characterized in that, in any one of the first to third embodiments, the retreated portion is inclined toward a direction away from the projecting portion.

The pillow packaging bag with contents according to a fifth embodiment of the present invention is characterized in that, in any one of the first to fourth embodiments, a sharp-edge preventing portion is provided at a corner of the pillow packaging bag.

The pillow packaging bag with contents according to a sixth embodiment of the present invention is characterized in that, in any one of the first to fifth embodiments, the fluid material is gel-state confectionery.

The pillow packaging bag with contents according to a seventh embodiment of the present invention is characterized in that, in the sixth embodiment, the gel-state confectionery is Konjac-containing jelly.

The pillow packaging bag with contents according to an eighth embodiment of the present invention is characterized in that, in any one of the first to seventh embodiments, the pillow packaging bag is formed of a packaging film excellent in lateral-cutting property.

### Advantageous Effects of Invention

In the pillow packaging bag with contents of the present invention, the back seal disposed on the rear surface is coupled only to the retreated portion of the lateral seal. Thus, the clean-cut opening can be formed easily in the projecting portion of the lateral seal. Therefore, when the opening of the pillow packaging bag is held in the mouth, the unpleasant feeling is not given to the consumer easily.

### Brief Description of Drawings

Figs. 1 are views illustrating a bagged jelly food 1 according to a first embodiment of the present invention, in which Fig. 1(a) is a front view, and Fig. 1(b) is a rear view.
Figs. 2 are views illustrating the bagged jelly food 1, in which Fig. 2(a) is a plan view, Fig. 2(b) is a bottom view, and Fig. 2(c) is a left side view.
Fig. 3 is a view illustrating a state where a projecting portion 23 is cut off, and Konjac-containing jelly 5 is pushed out.
Figs. 4 are views illustrating a bagged jelly food 2 according to a second embodiment of the present invention, in which Fig. 4(a) is a front view and Fig. 4(b) is a rear view.
Figs. 5 are views illustrating the bagged jelly food 2, in which Fig. 5(a) is a plan view, Fig. 5(b) is a bottom view, and Fig. 5(c) is a left side view.
Fig. 6 is a view illustrating a conventional bagged jelly food 51.
Fig. 7 is a view illustrating a state in which, in the conventional bagged jelly food 51, a Konjac-containing jelly 55 is pushed out.

### Description of Embodiments

### [First embodiment]

A bagged jelly food 1 according to a first embodiment of the present invention will be described.

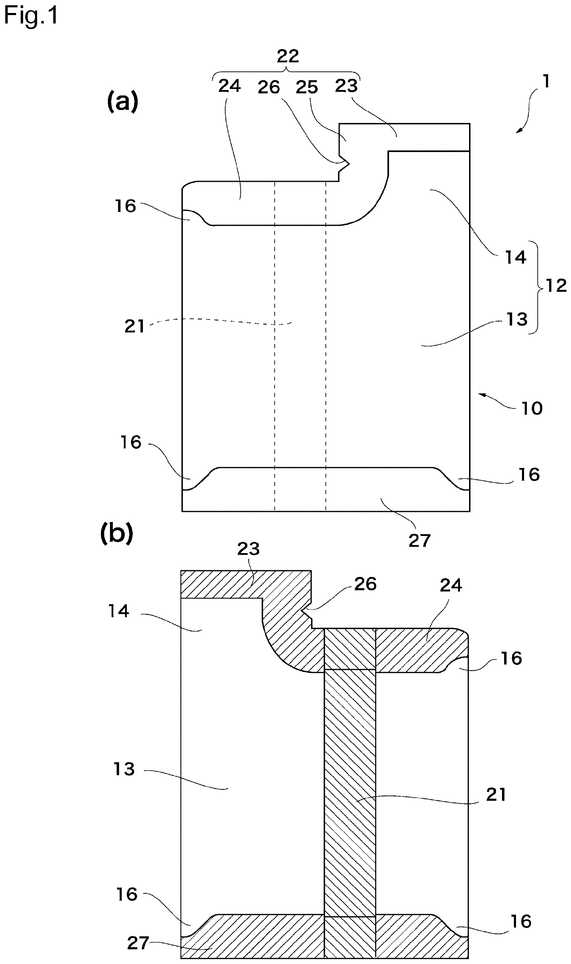

Figs. 1 are views illustrating the bagged jelly food 1 according to a first embodiment of the present invention, in which Fig. 1(a) is a front view, and Fig. 1(b) is a rear view. A hatched portion in Fig. 1(b) indicates a heat-fused (heat-sealed) portion.

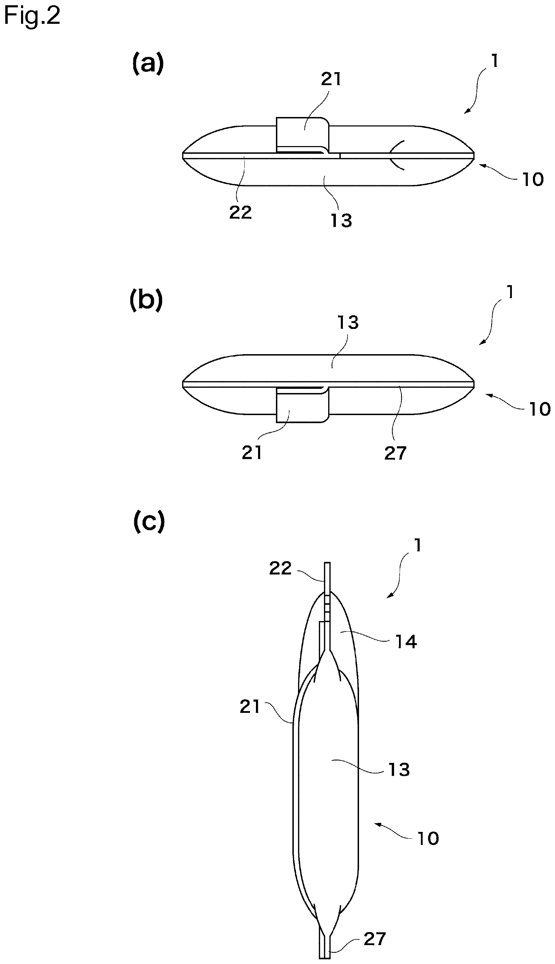

Figs. 2 are views illustrating the jelly food 1, in which Fig. 2(a) is a plan view, Fig.2 (b) is a bottom view, and Fig. 2(c) is a left side view.

In the bagged jelly food 1, a direction in which a back seal 21 extends is called a "vertical direction". In the vertical direction, a projecting portion 23 side in which an opening 18 is formed is called an "upper side", and an end portion side in which the opening 18 is not formed is called a "lower side". In other words, the lower side is a direction away from the projecting portion 23.

In directions orthogonal to the vertical direction, a width direction of the bagged jelly food 1 is called a "lateral direction". When seen from a front, the projecting portion 23 side in which the opening 18 is formed in the lateral direction is called a "right side", and a retreated portion 24 side is called a "left side".

In the directions orthogonal to the vertical direction, a thickness direction of the bagged jelly food 1 is called a "front-and-back direction". In the front-and-back direction, a surface side without the back seal 21 is called a "front surface side", and a surface side on which the back seal 21 is formed is called a "rear surface side".

The bagged jelly food (packaging bag with contents) 1 includes a package bag 10 made of a resin film and Konjac-containing jelly 5 filled/sealed in the packaging bag 10.

The Konjac-containing jelly (fluid material, gel-state confectionery) 5 is made by solidifying a jelly solution containing a gelling agent by an action of the gelling agent similarly to ordinary jelly.

The Konjac-containing jelly 5 is characterized by containing Konjac refined powder in the jelly solution. The Konjac-containing jelly 5 may further contain arbitrary materials as long as at least the gelling agent and the Konjac refined powder are contained. The Konjac-containing jelly 5 has unique chewiness with high elasticity by containing the Konjac refined powder.

The packaging bag (pillow packaging bag) 10 is a so-called pillow packaging bag and is a bag body in which heat- heat fusion is formed on both ends in the vertical direction and at a center on the rear surface. That is, the packaging bag 10 is formed by heat-fusing the both side ends of one sheet of film into a cylindrical shape and by further heat-fusing an upper end and a lower end of the cylindrical film.

The packaging bag 10 includes an accommodating portion 12, a back seal 21, and lateral seals 22, 27.

The accommodating portion 12 is a non-sealed portion which is not heat-fused in the one sheet of film and is a portion in which the Konjac-containing jelly 5 is filled/sealed.

The back seal 21 is formed over substantially the entire region in the vertical direction at the center on the rear surface of the packaging bag 10. The back seal 21 is also called a vertical seal or a center seal.

The lateral seal 22 is formed over the entire region in the lateral direction on the upper end. The lateral seal 27 is formed over the entire region in the lateral direction on the lower end.

The back seal 21 is formed substantially at the center of the packaging bag 10. When seen from the rear surface, the back seal 21 is folded to the right side. The upper end and the lower end of the back seal 21 are folded onto the lateral seals 22, 27. The upper end of the back seal 21 is folded onto the retreated portion 24 of the lateral seal 22. That is, the back seal 21 is coupled only to the retreated portion 24.

The lateral seal 22 has one side (right side when seen from the front) projecting in the vertical direction and the other side (left side when seen from the front) formed in a stepped state retreated in the vertical direction. In other words, the lateral seal 22 is formed having a so-called crank road (masugata road) shape. That is, the lateral seal 22 has a shape in which two roads bent at a right angle are connected to each other.

Specifically, the projecting portion 23 is disposed on the right side of the lateral seal 22, the retreated portion 24 is disposed on the left side, and a coupling portion (inner edge portion) 25 is disposed closer to the right side from the center when seen from the front.

The projecting portion 23 and the retreated portion 24 follow the lateral direction. The coupling portion 25 follows the vertical direction and couples a left end of the projecting portion 23 and a right end of the retreated portion 24. The coupling portion 25 is the inner edge of the packaging bag 10.

The projecting portion 23, the retreated portion 24, and the coupling portion 25 are formed having substantially the same width dimension (seal width).

Since the lateral seal 22 is formed in the stepped state, an upper part of the accommodating portion 12 is also formed having a stepped shape. That is, the upper part of the accommodating portion 12 has a shape following the lateral seal 22. As a result, the accommodating portion 12 has a main accommodating portion 13 located below the retreated portion 24 and a narrow accommodating portion 14 located below the projecting portion 23 and communicating with the main accommodating portion 13.

Since the coupling portion 25 is disposed closer to the right side from the center of the packaging bag 10, a length of the narrow accommodating portion 14 in the lateral direction is approximately 1/3 of the width of the packaging bag 10.

A cutting-off notch 26 configured to open the packaging bag 10 is provided on the coupling portion 25. The cutting-off notch 26 is a V-shaped cutaway formed in the coupling portion 25 and is provided in order to assist tearing-off of the packaging bag 10. That is, the cutting-off notch 26 is provided in order to form the opening 18 that crosses the narrow accommodating portion 14 from the coupling portion 25 and reaches a side edge of the packaging bag 10. By tearing off the packaging bag 10 by using the cutting-off notch 26, the opening 18 is formed in the upper part of the packaging bag 10. As a result, the projecting portion 23 becomes a pull-tub cut away from the packaging bag 10.

An accommodation buffering portion 16 is provided at the corner of the accommodating portion 12. The accommodation buffering portion (corner, sharp-edge preventing portion) 16 is a portion obtained by recessing a left corner of the lateral seal 22 (retreated portion 24) and both corners of the lateral seal 27 in the vertical direction and by enlarging the accommodating portion 12.

By providing the accommodating buffering portion 16, a so-called sharp edge can be prevented. As a result, when a plurality of the bagged jelly foods 1 is filled in a bag or a box, the sharp edge of the packaging bag 10 can be prevented from sticking adjacent another packaging bag 10 and from generating a pinhole.

The reason why the sharp-edge can be prevented by the accommodation buffering portion 16 is as follows.

In a pillow packaging machine including a lateral seal forming apparatus configured to form the lateral seal, a heated heat seal bar (lateral seal bar) is usually disposed on a front surface side of the pillow packaging bag. Then, the lateral seal of the pillow packaging bag is formed when it is pressed by this heat seal bar on a predetermined portion of the film in the lateral direction, and the films on the front surface side and the rear surface side are heat-sealed to each other.

At this time, the heated lateral seal front surface side can be shrunk more easily than on the rear surface side when it is cooled. Thus, in the conventional pillow packaging bag, such a phenomenon that the lateral seal falls down to the front surface side occurs with a boundary line between the lateral seal and the accommodation portion as an axis. Thus, the sharp edge portion can become sharper easily in the conventional lateral seal with a constant seal width.

On the contrary, in the packaging bag 10, the accommodating buffering portion 16 with the enlarged corner of the accommodating portion 12 is provided each on the lateral seals 22 (retreated portion 24), 27. And when the Konjac-containing jelly 5 is filled in the accommodation buffering portion 16, it supports the corner in a columnar state. Thus, formation of the sharp edge portion caused by falling-down at the corner is suppressed.

Therefore, in a state where the Konjac-containing jelly 5 is sealed/filled in the accommodating portion 12 of the packaging bag 10, and the bagged jelly food 1 is manufactured, sticking each other of the packaging bags 10 adjacent to each other or formation of a pinhole by a scratch can be suppressed.

In the accommodation buffering portion 16, it is important that a step is formed between a center part of the accommodating portion 12 and the both side end portions on boundaries between the lateral seals 22, 27 and the accommodating portion 12, and the accommodating portion 12 is provided so as to bite into the lateral seals 22, 27.

As a result, the seal widths of the lateral seals 22, 27 are larger at the center part and smaller on the both side ends. The dimension and the number of the accommodation buffering portion 16 are selected as appropriate in accordance with characteristics such as elongation, tensile strength and the like of the film, a size of the packaging bag 10, a filled amount of the contents and the like.

The bagged jelly food 1 is manufactured as follows, for example.

First, similarly to a case where an ordinary Konjac-containing jelly is made, a Konjac-containing jelly solution containing a gelling agent and Konjac powders is prepared. In this Konjac-containing jelly solution, saccharides, fruit juice, flavors, an acidifier, a food color and the like can be added as necessary in addition to the gelling agent and the Konjac powder.

Then, the prepared Konjac-containing jelly solution is heated/sterilized. The heating/sterilization can be performed by any method such as use of a tube-type heating/sterilizing apparatus, for example. A sterilization condition can be at 120 to 140°C for approximately 3 minutes, for example.

The sterilized Konjac-containing jelly solution is cooled by a cooling apparatus to approximately 60 to 70°C and filled/packaged by using an appropriate filling/packaging machine. The filing/packaging is preferably aseptic filling/packaging for packaging under an aseptic environment by using sterilized contents and sterilized packaging materials.

After filling/packaging, the packaged Konjac-containing jelly solution is cooled to 25°C or below and solidified. As a result, the bagged jelly food 1 in which the Konjac-containing jelly 5 is filled/sealed in the packaging bag 10 is obtained. In this bagged jelly food 1, since the Konjac-containing jelly 5 is solidified in the packaging bag 10, the Konjac-containing jelly 5 is present as one mass having a shape substantially equal to the shape of the accommodating portion 12.

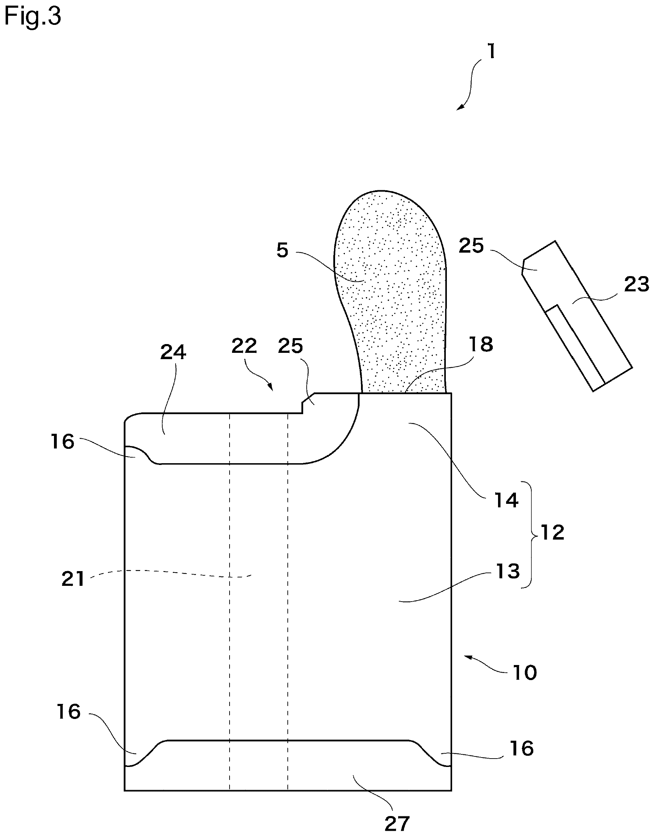

Fig. 3 is a view illustrating a state where the projecting portion 23 is cut off, and the Konjac-containing jelly 5 is pushed out.

In the bagged jelly food 1, the Konjac-containing jelly 5 sealed in the packaging bag 10 can be eaten as follows.

The consumer first tears off the upper part of the packaging bag 10 in the lateral direction by using the cutting-off notch 26. As a result, the packaging bag 10 is opened at the narrow accommodating portion 14, and the opening 18 is formed over the entire region of the narrow accommodating portion 14 in the lateral direction.

Then, the consumer squeezes the lower part of the packaging bag 10. When the lower part of the packaging bag 10 is squeezed, a force from the lower part to the upper part of the packaging bag 10 acts on the Konjac-containing jelly 5 sealed in the packaging bag 10, and the Konjac-containing jelly 5 is pushed out of the opening 18.

At this time, since the opening 18 is formed only in the narrow accommodating portion 14, upward movement of the Konjac-containing jelly 5 is held back by the retreated portion 24 of the lateral seal 22. That is, the retreated portion 24 functions as a movement suppressing structure which suppresses the movement of the Konjac-containing jelly 5 to the upper part when the lower part of the packaging bag 10 is squeezed.

In the packaging bag 10, the Konjac-containing jelly 5 is present as one mass and has unique elasticity derived from Konjac. Thus, the Konjac-containing jelly 5 is partially compressed toward the narrow accommodating portion 14, while the remaining part is torn off at the boundary between the narrow accommodating portion 14 and the retreated portion 24 and is pushed out of the opening 18. Since the Konjac-containing jelly 5 remains one mass in the main accommodating portion 13, it is pushed out of the opening 18 without the part being separated from the packaging bag 10.

As a result, even if the opened packaging bag 10 is strongly squeezed, although a part of the Konjac-containing jelly 5 is pushed out of the opening 18, it is not scattered out of the opening 18. That is because the remaining part of the Konjac-containing jelly 5 plays a role of an anchor by being held back by the retreated portion 24.

The retreated portion 24 holds back the upward movement of the Konjac-containing jelly 5 but does not limit movement in direction other than that. Thus, when the remaining amount of the Konjac-containing jelly 5 in the packaging bag 10 becomes small, the Konjac-containing jelly 5 in the vicinity of the retreated portion 24 can move toward the narrow accommodating portion 14 (opening 18). In the end, all the Konjac-containing jelly 5 can be pushed out of the accommodating portion 12.

In order to eat the Konjac-containing jelly 5 pushed out of the opening 18, it is needed to be bitten off by teeth. Thus, the Konjac-containing jelly 5 pushed out of the packaging bag 10 can be reliably prevented from jumping into the mouth as it is and sticking in the throat. Moreover, since the Konjac-containing jelly 5 pushed out of the packaging bag 10 needs to be bitten off, chewiness unique to the Konjac-containing jelly can be fully enjoyed.

The consumer often holds the upper part of the packaging bag 10 in the mouth when eating the Konjac-containing jelly 5 pushed out of the opening 18. That is, the consumer holds the narrow accommodating portion 14 (opening 18) with the lips.

At this time, since the opening 18 touches the lips of the consumer, if the opening 18 is staggered or the corner of the back seal 21 touches the lips, it gives an unpleasant feeling.

In the packaging bag 10, since the back seal 21 is folded onto the retreated portion 24 of the lateral seal 22, the back seal 21 is not included in the opening 18. That is, since the cutting-off notch 26 is formed only on the coupling portion 25, and only the coupling portion 25 is torn off, the opening 18 does not become staggered. Therefore, the bagged jelly food 1 is prevented from giving the unpleasant feeling to the consumer.

Moreover, since the back seal 21 is folded onto the retreated portion 24 of the lateral seal 22, the opening 18 does not reach (is not caught by) the back seal 21 when the opening 18 is formed (the projecting portion 23 is cut off). Thus, the opening 18 is formed appropriately. In other words, such situations can be avoided that the opening 18 is larger than necessary or to the contrary is not opened sufficiently.

Therefore, the problem that the Konjac-containing jelly 5 overflows from the opening 18 or is jumped out or the problem that the Konjac-containing jelly 5 is not pushed out even if the packaging bag 10 is pressed does not occur.

As described above, in the bagged jelly food 1, the back seal 21 is coupled only to the retreated portion 24 of the lateral seal 22. Thus, the smooth opening 18 can be formed easily in the projecting portion 23 of the lateral seal 22. Therefore, when the opening 18 of the packaging bag 10 is held in the mouth, the unpleasant feeling is hardly given to the consumer.

Moreover, since the opening 18 is not caught by the back seal 21, the opening 18 is formed appropriately. Therefore, an appropriate amount of the Konjac-containing jelly 5 is pushed out of the opening 18.

### [Second embodiment]

A bagged jelly food 2 according to a second embodiment of the present invention will be described.

The same portions as those in the bagged jelly food 1 according to the first embodiment are given the same reference numerals, and the description will be omitted.

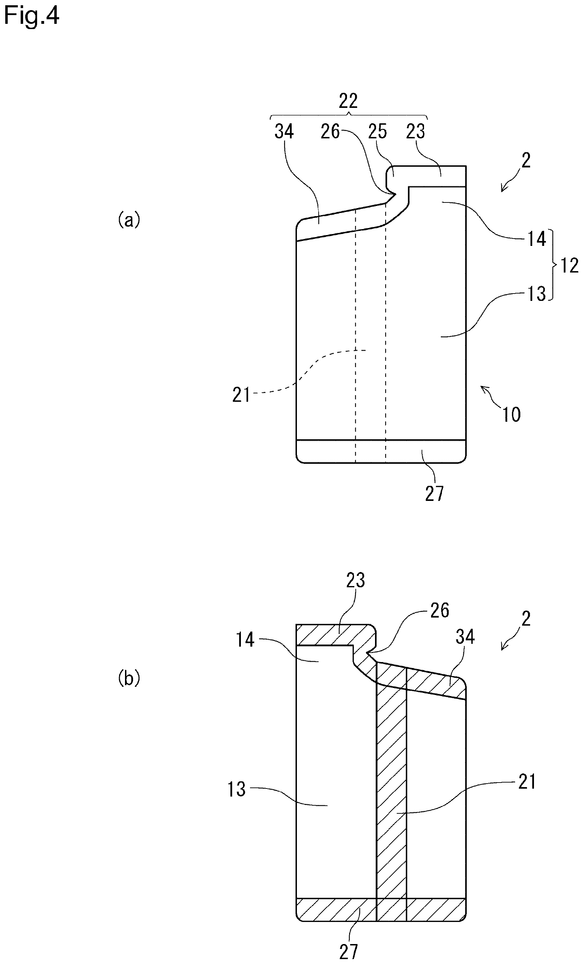

Figs. 4 are views illustrating the bagged jelly food 2 according to the second embodiment of the present invention, in which Fig. 4(a) is a front view, and Fig. 4(b) is a rear view. A hatched portion in Fig. 4(b) indicates a heat-sealed (heat-fused) portion.

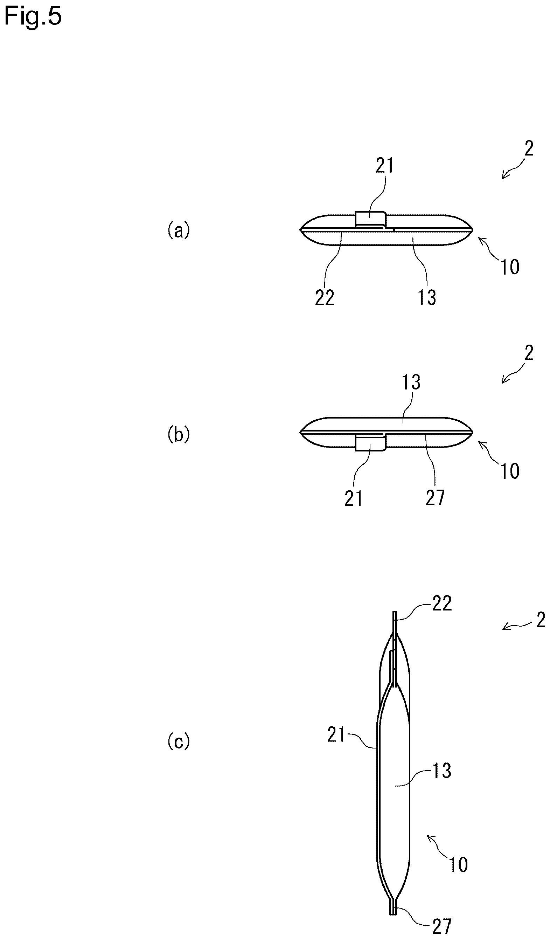

Figs. 5 are views illustrating the bagged jelly food 2, in which Fig. 5(a) is a plan view, Fig. 5(b) is a bottom view, and Fig. 5(c) is a left side view.

The bagged jelly food (packaging bag with contents) 2 has a shape of a retreated portion 34 different from that of the bagged jelly food 1.

Specifically, when seen from the front, the projecting portion 23 is disposed on the right side of the lateral seal 22, the retreated portion 34 is disposed on the left side, and the coupling portion (inner edge portion) 25 is disposed closer to the right side from the center.

The projecting portion 23 follows the lateral direction. The retreated portion 34 extends diagonally downward. The retreated portion 34 is inclined downward at a gentle angle with respect to the lateral direction. In more detail, the right side from the center of the retreated portion 34 is inclined at an angle of approximately 40° with respect to the lateral direction. The left side from the center of the retreated portion 34 is inclined at an angle of approximately 15 ° with respect to the lateral direction.

The coupling portion 25 couples the left end of the projecting portion 23 and the right end of the retreated portion 34 along the vertical direction. The projecting portion 23, the retreated portion 34, and the coupling portion 25 are formed having the substantially same width dimension (seal width).

In the bagged jelly food 2, the back seal 21 is coupled only to the retreated portion 24 of the lateral seal 22 similarly to the bagged jelly food 1. Thus, the clean-cut opening 18 can be formed easily in the projecting portion 23 of the lateral seal 22. Therefore, when the opening 18 of the packaging bag 10 is held in the mouth, the unpleasant feeling is hardly given to the consumer.

Moreover, since the opening 18 is not caught by the back seal 21, the opening 18 is formed appropriately. Therefore, an appropriate amount of the Konjac-containing jelly 5 is pushed out of the opening 18.

Particularly, the bagged jelly food 2 has the retreated portion 34 inclined diagonally downward. Thus, when the opening 18 of the packaging bag 10 is held in the mouth, the unpleasant feeling is given to the consumer more hardly.

Moreover, the retreated portion 34 is inclined in two steps. That is, the right side from the center is retreated diagonally downward largely, and the left side from the center is retreated gently. Thus, a distance in the vertical direction between the projecting portion 23 and the retreated portion 34 becomes larger. As a result, when the projecting portion 23 is cut off so as to form the opening 18, the projecting portion 23 and the retreated portion 34 can be gripped easily. Therefore, when the projecting portion 23 is to be cut off, the consumer can adjust the force easily, and the opening 18 can be formed appropriately.

The present invention is not limited to the aforementioned embodiment but includes those with various modifications added to the aforementioned embodiment within a range not departing from the gist of the present invention. The specific shapes, configurations and the like described in the embodiments are only examples, and modifications can be made as appropriate.

For example, in the aforementioned embodiments, the case in which the packaging bag 10 is substantially a regular square is illustrated, but vertical and lateral lengths of the packaging bag 10 are arbitrary. For example, the packaging bag 10 may be vertically longer (the length in the vertical direction is larger than the length in the lateral direction).

The content of the bagged jelly 1 is not limited to the case of the Konjac-containing jelly 5. It may be agar or gelatin. Moreover, it is not limited to solid but may be drinking water (liquid). Furthermore, the content is not limited to foods but may be pharmaceuticals or the like.

That is, the content only needs to be the one pushed out (fluid material) of the opening 18 when the lower part of the packaging bag 10 is squeezed. The fluid materials include semi-solid materials such as margarine, shortening, chocolate and the like.

The filling/packaging is not limited to aseptic filling/packaging.

The cutting-off notch 26 is not limited to the V-shaped cutaway. It only needs to have a structure in which the opening 18 is formed in the upper part of the packaging bag 10 by tearing off the packaging bag 10 (cutting off the projecting portion 23). For example, it may be an easy opening processing such as perforation.

Moreover, a size, a cutaway depth and the like of the cutting-off notch 26 can be set arbitrarily.

For the packaging bag 10, a packaging film excellent in lateral cutting property (straight cutting property) may be used. That is, such a film that the packaging bag 10 can be cut in the lateral direction easily and is hard to be cut in the vertical direction is used.

As a result, the opening 18 is formed favorably in the lateral direction. The opening 18 can be prevented from becoming too large or to the contrary, such a situation that the opening 18 is not opened sufficiently can be avoided.

Examples of the packaging film excellent in the lateral cutting property (straight cutting property) include "YT42 TORAYFAN" by Toray Industries, Ltd., "Caralyan Y" by Denka Company Ltd. and the like.

The accommodation buffering portion 16 may be provided at the right corner of the lateral seal 22 (projecting portion 23).

The accommodation buffering portion 16 does not have to be provided in the accommodating portion 12.

### Reference Numerals

- 1, 2: bagged jelly food (packaging bag with contents)
- 5: Konjac-containing jelly (fluid material, gel-state confectionery)
- 10: packaging bag (pillow packaging bag)
- 12: accommodating portion
- 13: main accommodating portion
- 14: narrow accommodating portion
- 16: accommodating buffering portion (sharp-edge preventing portion)
- 18: opening
- 21: back seal
- 22: lateral seal
- 23: projecting portion
- 24: retreated portion
- 25: coupling portion (inner edge portion)
- 26: cutting-off notch
- 27: lateral seal
- 34: retreated portion

## Claims

1. A packaging bag (1,2) with contents, the packaging bag with contents being formed by filling a pillow packaging bag (10) with a fluid material (5) and sealing the pillow packaging bag, wherein
a lateral seal (22) disposed on an upper end of the pillow packaging bag has a projecting portion (23) and a retreated portion (24,34) formed in a stepped state,
a back seal (21) disposed on a rear surface of the pillow packaging bag is coupled only to the retreated portion, and
the projecting portion is cut off in a lateral direction so that the fluid material is pushed out.

2. The packaging bag with contents according to claim 1, wherein the back seal is folded onto the retreated portion.

3. The packaging bag with contents according to claim 1 or 2, wherein a cutting-off notch (26) is provided on an inner edge portion (25) connecting the projecting portion and the retreated portion.

4. The packaging bag with contents according to any one of claims 1 to 3, wherein the retreated portion is inclined toward a direction away from the projecting portion.

5. The packaging bag with contents according to any one of claims 1 to 4, wherein a sharp-edge preventing portion (16) is provided at a corner of the pillow packaging bag.

6. The packaging bag with contents according to any one of claims 1 to 5, wherein the fluid material is gel-state confectionery (5).

7. The packaging bag with contents according to claim 6, wherein the gel-state confectionery is Konjac-containing jelly (5).

8. The packaging bag with contents according to any one of claims 1 to 7, wherein the pillow packaging bag is formed of a packaging film excellent in lateral-cutting property
